Europäisches Patentamt

European Patent Office

Office européen des brevets

(11) Veröffentlichungsnummer: **0 420 203 A2**

# EUROPÄISCHE PATENTANMELDUNG

(21) Anmeldenummer: 90118490.3

(22) Anmeldetag: 26.09.90

(51) Int. Cl.5: **G06F 13/40**

(30) Priorität: 29.09.89 DE 3932701

(43) Veröffentlichungstag der Anmeldung:
03.04.91 Patentblatt 91/14

(84) Benannte Vertragsstaaten:
AT BE CH DE ES FR GB IT LI NL SE

(71) Anmelder: **Siemens Aktiengesellschaft**
**Wittelsbacherplatz 2**
**W-8000 München 2(DE)**

(72) Erfinder: **Siebert, Franz, Dipl.-Ing.**
**Bergstrasse 11**
**W-8900 Augsburg(DE)**

(54) **Schaltungsanordnung zur Ansteuerung eines bidirektionalen Bustreibers.**

(57) Es soll eine Schaltungsanordnung für Bussysteme ohne Statussignal zur Anzeige einer Durchschalterichtung angegeben werden, die folgende zwei Zeitbedingungen bezüglich eines Richtungssignals (RS) und eines Durchschaltesignals (DS) erfüllt: Zu Beginn eines Buszugriffs soll das Richtungssignal (RS) vor dem Durchschaltesignal (DS) zur Verfügung stehen, während am Ende eines Buszugriffs das Richtungssignal (RS) erst umschaltet, wenn das Durchschaltesignal (DS) zurückgenommen ist. Hierzu weist die Schaltungsanordnung eine Kippschaltung (FF) auf, die aus einem Lese- bzw. einem Schreibsignal ein Richtungssignal (RS) als Statussignal für die Anzeige einer Durchschalterichtung nachbildet und über das Ende eines Buszugriffs hinaus speichert.

## SCHALTUNGSANORDNUNG ZUR ANSTEUERUNG EINES BIDIREKTIONALEN BUSTREIBERS

Die Erfindung betrifft eine Schaltungsanordnung zur Ansteuerung eines bidirektionalen Bustreibers gemäß den Merkmalen des Oberbegriffs des Anspruchs 1.

Bei Mikroprozessoranwendungen mit einem bidirektionalen Bustreiber sollten bezüglich der die Durchschalterichtung angebenden und die Durchschaltung selbst bewirkenden Signale folgende zwei Zeitbedingungen eingehalten werden: Das die Durchschalterichtung angebende Richtungssignal sollte zu Beginn eines Buszugriffs stabil anliegen, bevor das die Durchschaltung freigebende Durchschaltesignal erzeugt wird; umgekehrt sollte am Ende eines Buszugriffs eine Änderung des Richtungssignals erst vorgenommen werden, wenn das Durchschaltesignal zurückgenommen ist.

Bei Bussystemen ohne Statussignal für die Vorgabe einer Durchschalterichtung wird das vom Bustreiber benötigte Richtungssignal hilfsweise dadurch bereitgestellt, daß an die komplementär ausgebildeten Eingänge des Bustreibers für die Vorgabe der Durchschalterichtung entweder ein mitübertragenes Lese- oder ein mitübertragenes Schreibsignal angelegt wird. Da das jeweilige an diese Eingänge angelegte Signal immer nur dann aktiv geschaltet wird, wenn ein entsprechender Buszugriff tatsächlich erfolgt, schaltet der Bustreiber die Durchschalterichtung mit der Zurücknahme des jeweiligen Signals um.

Zur rechtzeitigen Abkopplung des Bustreibers vom Bussystem bzw. zu dessen rechtzeitiger Freischaltung wird dem Bustreiber ein Durchschaltesignal zugeführt, das über ein Schaltnetz in Abhängigkeit vom Lese- und vom Schreibsignal und zusätzlich von Adressensignalen gebildet wird.

Die Adressensignale dienen zur Initialisierung der Schaltungs-anordnung und liegen jeweils als erstes bei einem Buszugriff an. Die Bildung des Durchschaltesignals hängt dann nur mehr vom Vorliegen des Lese- bzw. Schreibsignals ab.

Die Bildung des Durchschaltesignals erfolgt aufgrund der Gatterlaufzeit des Schaltnetzes mit einer Verzögerung. Zu Beginn eines Buszugriffs liegt deshalb das die Durchschalterichtung angebende Signal eher am Bustreiber an als das den Bustreiber freischaltende Durchschaltesignal. Die erste der beiden eingangs genannten Zeitbedingungen ist deshalb erfüllt. Am Ende eines Buszugriffs aber kommt es vor, daß durch die Zurücknahme des Lese- bzw. des Schreibsignals die Durchschalterichtung vom Bustreiber umgeschaltet wird, bis das vom Schaltnetz gebildete Durchschaltesignal den Bustreiber vom Bussystem abkoppelt. Die zweite der eingangs genannten Zeitbedingungen ist nicht erfüllt und kann zu Störungen des Busbetriebs führen. In den kurzzeitigen Umschaltphasen kommt es zu einer hohen Stromaufnahme von an dem Bus angeschalteten Bauteilen, durch die die Bauteile zerstört werden können.

Aufgabe der Erfindung ist es, eine Schaltungsanordnung der eingangs genannten Art so zu verbessern, daß trotz der Verwendung des Lese- bzw. des Schreibsignals als Hilfssignal zur Anzeige einer Durchschalterichtung beide eingangs genannten Zeitbedingungen erfüllt werden.

Diese Aufgabe wird erfindungsgemäß bei einer Schaltungsanordnung der eingangs genannten Art durch das im kennzeichnenden Teil des Anspruchs 1 angegebene Merkmal gelöst. Hiernach wird eine Kippschaltung vorgesehen, die aus dem Lese- und dem Schreibsignal ein Richtungssignal als Statussignal für den Bustreiber nachbildet. Dieses Signal bleibt durch den Speichereffekt der Kippschaltung auch noch nach der Zurücknahme des Lese- bzw. des Schreibsignals erhalten. Die Durchschalterichtung des Bustrei bers am Ende eines Buszugriffs wird nicht mehr umgeschaltet, bis der Bustreiber durch das Durchschaltesignal vom Bussystem abgekoppelt ist. Eine Umschaltung der Durchschalterichtung erfolgt erst wieder in einem neuerlichen Buszugriff, der durch Anlegen von neuen Adressensignalen an das Schaltnetz eingeleitet wird.

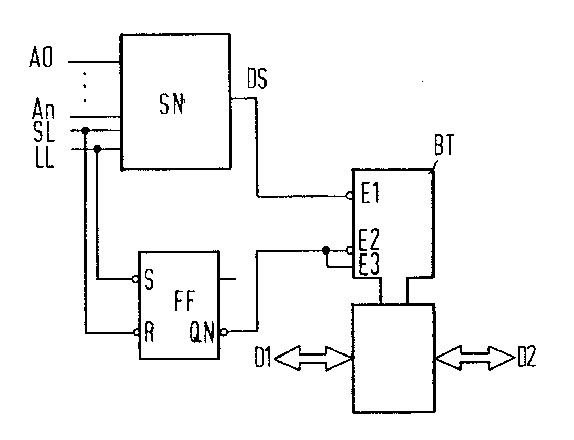

Nachfolgend wird ein Ausführungsbeispiel der Erfindung anhand der Zeichnung näher erläutert.

Die Figur zeigt ein Prinzipschaltbild einer Schaltungsanordnung zur Ansteuerung eines bidirektionalen Bustreibers gemäß der Erfindung. Für das Ausführungsbeispiel ist dabei angenommen, daß eine Aktivierung der Schaltungsanordnung jeweils dann erfolgt, wenn die entsprechenden Signale einen Signalpegel logisch 0 aufweisen.

Die Schaltungsanordnung weist neben dem Bustreiber BT ein Schaltnetz SN und eine Kippschaltung FF auf. Der Bustreiber BT schaltet in Abhängigkeit von einem Richtungssignal RS und einem Durchschaltesignal DS einen ersten und zweiten auf den Bustreiber BT geführten Datenbus D1 und D2 so zusammen, daß eine Datenübertragung in die eine bzw. andere Richtung möglich ist. Das Richtungssignal RS gibt die Durchschalterichtung des Bustreibers an, während das Durchschaltesignal den Bustreiber veranlaßt, die Durchschaltung tatsächlich vorzunehmen.

Das Richtungssignal RS wird von der Kippschaltung FF in Abhängigkeit von einem auf einer Schreib- und von einem auf einer Lesesignalleitung SL und LL übertragenen Signal gebildet. Die Schreibsignalleitung SL ist dabei an einen Setzeingang S und die Lesesignalleitung LL an einen Rücksetzeingang R der Kippschaltung FF angeschlossen. Diese Eingänge sind so ausgebildet, daß sie ankommende Signale negieren. Die Kippschaltung FF führt die Funktion eines RS-Kippgliedes aus. Ein negierender Ausgang QN der Kippschaltung FF ist an komplementär ausgebildete Eingänge E2 und E3 des Bustreibers BT für die Anzeige einer Durchschalterichtung angeschlossen.

Das Schaltnetz SN weist Eingänge für Adressensignalleitungen A0 bis An sowie Eingänge für die Schreib- und die Lesesignalleitung SL und LL auf. Bezüglich der beiden letzten Signalleitungen sind das Schaltnetz SN und die Kippschaltung FF parallel geschaltet. Das Schaltnetz SN erzeugt in Abhängigkeit von den Signalen der Adressensignalleitungen A0 bis An sowie von den Signalen der Schreib- und der Lesesignalleitung SL und LL am zugehörigen Ausgang das Durchschaltesignal DS. Dieser Ausgang ist mit einem weiteren Eingang E1 des Bustreibers BT, der als negierender Eingang ausgebildet ist, verbunden. Das Schaltnetz SN führt die Funktion einer Decodierschaltung aus, so daß am zugehörigen Ausgang nur bei Vorliegen bestimmter Kombinationen von Signalen auf den verschiedenen angeschlossenen Signalleitungen ein Durchschaltesignal DS erzeugt wird.

Das Zusammenschalten der beiden Datenbusse D1 und D2 so, daß eine Datenübertragung in die eine oder andere Richtung möglich ist, wird durch Anlegen von Adressensignalen am Schaltnetz SN eingeleitet. Anschließend wird entweder das Schreib- oder das Lesesignal sowohl an das Schaltnetz SN als auch an die Kippschaltung FF angelegt. Mit dem Anlegen des Schreib- bzw. des Lesesignals wird die Kippschaltung FF entweder gesetzt oder zurückgesetzt. An den beiden komplementär ausgebildeten Eingängen E2 und E3 des Bustreibers BT für die Anzeige einer Durchschalterichtung liegt eine Signalkombination an, gemäß der der Bustreiber BT die Durchschaltung des Busses in die eine oder andere Richtung vorbereitet.

Das Schaltnetz SN erzeugt aufgrund seiner Gatterlaufzeit das Durchschaltesignal DS verzögert. Mit der Erzeugung des Durchschaltesignals DS wird der Bustreiber BT freigeschaltet

Am Ende eines Buszugriffs, d.h.., wenn das Schreib- bzw. das Lesesignal wieder zurückgenommen wird, bleibt das für den Bustreiber zuletzt maßgebende Richtungssignal durch die Kippschaltung FF erhalten. Die durch die Zurücknahme des Lese- bzw. Schreibsignals bedingte Signalveränderung hat über das Schaltnetz SN zur Folge, daß das Durchschaltesignal DS zurückgenommen wird. Der Bustreiber BT wird in einen hochohmigen Zustand geschaltet, der gleichzeitig der Ausgangszustand für einen neuerlichen Buszugriff ist.

**Ansprüche**

1. Schaltungsanordnung zur Ansteuerung eines bidirektionalen Bustreibers mit einem Richtungs- und einem Durchschaltsignal für Bussysteme ohne Statussignal zur Vorgabe einer Durchschalterichtung für den Bustreiber, der zueinander komplementäre Anschlußpunkte für die Anzeige einer Durchschalterichtung auf weist und dem über einen weiteren Anschlußpunkt ein an Adressensignalleitungen sowie an eine Schreib- und eine Lesesignalleitung angeschlossenes Schaltnetz zur Erzeugung des Durchschaltesignals vorgeschaltet ist, **dadurch gekennzeichnet,** daß eine Kippschaltung (FF) vorgesehen ist, die mit einem Setz- und einem Rücksetzeingang (S und R) parallel zum Schaltnetz (SN) an die Lese- und die Schreibsignalleitung (LL und SL) angeschlossen und über einen Ausgang (z.B. QN) mit den Anschlußpunkten (E2 und E3) für die Anzeige einer Durchschalterichtung des Bustreibers (BT) verbunden ist.